# FASCICULE DE BREVET EUROPEEN

(11) **EP 1 156 948 B1**
(45) Date de publication et mention de la délivrance du brevet: **10.11.2004**
(21) Numéro de dépôt: 00916879.0
(22) Date de dépôt: 28.02.2000
(51) Int. Cl.: B60R 21/01

(54) **DISPOSITIF POUR ARRETER LE DEPLOIEMENT D'UN AIRBAG DANS UN VEHICULE**
VORRICHTUNG ZUM ANHALTEN DES ENTFALTENS EINES AIRBAGS
DEVICE FOR STOPPING AN AIRBAG UNFOLDING IN A MOTOR VEHICLE

(30) Priorité: 01.03.1999 LU 90358
(43) Date de publication de la demande: 28.11.2001
(73) Titulaire: IEE INTERNATIONAL ELECTRONICS & ENGINEERING S.A., 6468 Echternach (LU)
(72) Inventeur: SERBAN, Bogdan, L-4610 Niederkorn (LU); WITTE, Michel, L-1420 Luxembourg (LU); SCHOOS, Aloyse, L-8084 Bertrange (LU)
(74) Mandataire: Beissel, Jean
(86) Numéro de dépôt international: PCT/EP2000/001654
(87) Numéro de publication internationale: WO 2000/051849

(56) Documents cités:
- WO-A-98/39180
- WO-A-98/51547
- GB-A- 2 319 997

## Description

### Introduction

La présente invention concerne un dispositif pour arrêter le déploiement d'un airbag dans un véhicule.

Afin de protéger la vie des passagers lors d'un accident de la circulation, les véhicules modernes sont équipés le plus souvent d'un système de protection comprenant plusieurs airbags qui servent à absorber l'énergie d'un passager libérée lors du choc de l'accident. Un détecteur de décélération détecte le choc et commande un ou plusieurs dispositifs gonfleurs afin de remplir l'airbag d'un gaz et de le déployer ainsi entre l'occupant de la voiture et les parties de la carrosserie resp. du tableau de bord qui risqueraient de blesser l'occupant.

Afin d'éviter les blessures causées par l'airbag lui-même, il est avantageux d'arrêter le déploiement de l'airbag une fois que l'airbag s'est assez rapproché du passager ou bien que le passager est assez enfoncé dans l'airbag pour que l'airbag puisse exercer son action absorbante. En arrêtant ainsi le déploiement de l'airbag, on peut éviter que la pression exercée par l'airbag déployé sur le passager augmente de manière incontrôlable.

Pour des systèmes de protection dans lesquels l'airbag est gonflé par plusieurs gonfleurs actionnés successivement, on connaît un dispositif pour arrêter le déploiement de l'airbag comprenant plusieurs conducteurs métalliques de longueurs différentes, intégrés dans la paroi frontale de l'airbag, c'est-à-dire dans la paroi de l'airbag qui est dirigée vers le passager. Chaque conducteur métallique est relié au dispositif de commande des gonfleurs de telle manière que la rupture d'un conducteur déclenche l'actionnement d'un gonfleur associé à ce conducteur. Au fur et à mesure que l'airbag se déploie, la paroi frontale de l'airbag se déplie et les conducteurs se déchirent successivement, déclenchant ainsi l'actionnement du gonfleur suivant. Lorsque le volume de l'airbag est tel que l'airbag touche le passager, la paroi frontale de l'airbag ne se déplie plus et le conducteur suivant ne se déchire pas. On peut éviter de cette manière que le gonfleur suivant ne soit actionné et que la pression exercée par l'airbag sur le passager augmente trop.

Une autre méthode pour arrêter le déploiement de l'airbag est de contrôler sa vitesse de déploiement Cecl peut être réalisé par un fil présentant sur toute sa longueur un codage à couleurs alternées, qui est fixé d'un côté à l'intérieur de l'airbag à la face frontale de celui-ci. Le fil passe par un détecteur optique qui, lors du déploiement de l'airbag, détecte la vitesse de passage du fil à l'aide du codage p.ex. en noir et blanc. Lorsque la face frontale ne s'éloigne plus du détecteur optique, c'est-à-dire lorsque le volume de l'airbag est tel que la paroi frontale touche le passager, la vitesse de passage du fil dans le détecteur devient nulle. Le dispositif de commande de l'airbag arrête alors le gonfleur et/ou ouvre une ventilation dans l'airbag pour que celui-ci ne se gonfle pas ultérieurement

Les deux systèmes décrits ci-dessus, détectant par des méthodes différentes la collision de l'airbag avec l'occupant du véhicule, ne fonctionnent que si le passager freine suffisamment le déploiement de l'airbag pour que les systèmes se déclenchent. Or un enfant ou un adulte léger n'a souvent pas assez de poids pour arrêter le déploiement de l'airbag. Par conséquent, les systèmes de protection ne fonctionnent pas et le déploiement de l'airbag continue bien qu'une forte pression entre l'airbag et l'occupant du véhicule est exercée.

Afin de remédier à cette situation, le document GB-A-2319997 décrit un système pour arrêter le déploiement d'un airbag d'un véhicule, selon le préambule de la revendication 1, qui comprend un détecteur de proximité arrangé sur la face frontale de l'airbag. Le détecteur de proximité permet de détecter la distance de l'airbag par rapport à un occupant du véhicule et génère un signal de distance qui est transmis à un dispositif de commande de l'airbag. Lorsqu'une certaine distance entre l'airbag et l'occupant est atteinte, le dispositif de commande arrête le déploiement de l'airbag. D'un côté un tel système permet d'éviter que le passager est blessé par l'airbag à cause d'une mauvaise position, d'un autre côté ce système risque d'arrêter le déploiement de l'airbag avant que ce dernier ne puisse exercer sa fonction amortissante.

### Objet de l'invention

L'objet de la présente invention est de proposer un système amélioré pour arrêter le déploiement d'un airbag dans un véhicule.

### Description générale de l'invention

Conformément à l'invention, cet objectif est atteint par un système pour arrêter le déploiement d'un airbag d'un véhicule, comprenant un détecteur pour détecter la position de l'airbag par rapport à un occupant du véhicule. Le détecteur est disposé sur l'airbag dans une région qui, lors du déploiement de l'airbag, est dirigée vers l'occupant du véhicule et génère un signal de position qui est alimenté à un dispositif de commande de l'airbag. Le dispositif de commande arrête le déploiement de l'airbag lorsque ledit signal de position indique une position prédéterminée de l'airbag par rapport à l'occupant. Conformément à l'invention, le détecteur est un détecteur de contact pour détecter un contact entre l'airbag et l'occupant. Un tel détecteur permet de détecter la collision entre l'airbag et le passager.

Ce système permet d'arrêter le déploiement de l'airbag dès qu'un contact entre l'airbag et l'occupant est établi et donc dès que l'airbag peut assurer exercer sa fonction amortissante. Il est à noter que l'occupant ne doit pas freiner complètement le déploiement de l'airbag pour que le système d'arrêt soit déclenché.

La détection de la collision peut être effectuée par une surveillance de la pression dans l'airbag. Au moment de la collision la courbe de la pression présente une discontinuité qui est facile à détecter. Une autre méthode consiste dans la surveillance du mouvement de la paroi frontale de l'airbag. Cette surveillance peut être réallsée à l'intérieur de l'airbag p.ex. au moyen d'un système optique, qui détecte le moment où la paroi frontale cesse de s'éloigner de la cassette.

Un capteur qui est intégré dans l'airbag peut comprendre une ou plusieurs fibres optiques, dont les propriétés de transmission de la lumière varient avec un déformation de la fibre. En surveillant ces caractéristiques de transmission, on peut détecter le moment de la collision de l'airbag avec le passager par des propriétés de transmission correspondantes à un contact ou à une déformation caractéristique de la fibre.

Dans une exécution préférée, ledit détecteur de contact est un capteur de force qui détecte la pression exercée par l'airbag sur l'occupant. Un tel système permet par conséquent de déclencher le système d'arrêt dès qu'une certaine pression limite est atteinte. Le seuil pour la pression peut être prédéterminé librement, il sera déterminé de manière à assurer un déploiement suffisant de l'airbag pour que celui-ci puisse exercer sa fonction amortissante.

De préférence, le détecteur de force comprend au moins deux structures d'électrodes disposées sur l'airbag à une certaine distance l'une de l'autre et une couche en matière semi-conductrice disposée dans une zone active du capteur, au-dessus desdites structures d'électrodes et en contact intime avec celles-ci, ladite couche en matière semi-conductrice présentant une résistance interne variant avec une déformation de ladite couche. Cette construction du détecteur résuite en un détecteur de force très mince et très flexible qui ne gêne pas le libre déploiement de l'airbag. En effet, puisque les structures d'électrodes et la couche en matière semi-conductrice sont directement disposées sur l'airbag, un tel détecteur de force ne nécessite aucun support supplémentaire et présente par conséquent une épaisseur très faible.

Il est à noter que la résistance interne de la couche semi-conductrice peut varier dans le même sens que la déformation (p.ex. la résistance augmente quand la pression augmente) ou dans le sens contraire de la déformation (par exemple la résistance diminue quand la pression augmente).

Dans une première exécution avantageuse, ladite couche en matière semi-conductrice comprend une encre semi-conductrice qui est imprimée sur lesdites structures d'électrodes. L'impression peut se faire p.ex. par la technique de la sérigraphie ou selon le principe du jet d'encre.

Dans une exécution alternative, ladite couche en matière semi-conductrice comprend un élastomère conductif, granulé ou non-granulé, qui est déposé ou collé sur lesdites structures d'électrodes. Une telle couche en matière semi-conductrice présente une meilleure flexibilité que les couches en encre semi-conductrice.

Il est à noter que la couche en matière semi-conductrice est divisée de préférence en plusieurs zones, disposées à différents endroits au dessus desdites structures d'électrodes et définissant ainsi plusieurs zones actives dudit détecteur.

Lesdites structures d'électrodes du capteur de force sont p.ex. déposées ou imprimées directement sur le tissu de l'airbag. Alternativement, lesdites structures d'électrodes sont gravées ou corrodées dans une couche métallique déposée sur l'airbag. Dans une autre variante, lesdites structures d'électrodes sont tissées ou tricotées directement dans le tissu de l'airbag. Des électrodes tissées ou tricotées directement dans un tissu et des procédés de fabrication sont p.ex. décrits dans les documents LU 90 278, LU 90 256 ou LU 90 321.

Afin de protéger le détecteur de la corrosion, le détecteur comprend de préférence une couche protectrice appliquée sur lesdites structures d'électrodes resp. sur lesdites structures d'électrodes et ladite couche ou lesdites couches en matière semi-conductrice. Il peut s'agir par exemple d'une couche de laque en matière inerte qui est appliquée par simple immersion du capteur dans la laque.

Dans une exécution avantageuse du système, ledit détecteur de position est relié audit système de commande par l'intermédiaire de conducteurs déposés ou imprimés sur l'airbag. Ces conducteurs présentent tout comme les structures d'électrodes une flexibilité très élevée et par conséquent ne risquent pas de se déchirer lors du pliage resp. du déploiement de l'airbag.

Le système décrit ci-dessus est de préférence pourvu d'un circuit de surveillance du fonctionnement du capteur et d'intégrité des conducteurs. Lors d'une défaillance du système, l'airbag sera déployé selon un mode standard, qui lui peut être déterminé par d'autres systèmes de détection de la voiture.

Il est à noter que le système selon la présente invention peut être utilisé pour tous les types d'airbag d'un véhicule, c'est-à-dire pour les airbags frontaux, les airbags latéraux, les airbags de tête etc. Un système de protection d'occupants d'un véhicule comprenant plusieurs airbags peut alors comprendre plusieurs systèmes pour arrêter le déploiement d'un airbag, chaque système pour arrêter le déploiement d'un airbag étant associé à un des airbags du véhicule.

Il est à noter que un tel système pour arrêter le déploiement d'un airbag d'un véhicule permet d'améliorer considérablement l'algorithme de déploiement de l'airbag. Dans une voiture équipée d'un tel système, la décision initiale de déployer l'airbag ou les airbags selon un certain mode peut être prise très tôt après la détection d'un choc. Le système tel que décrit permet en effet de réviser la décision de déploiement à tout moment de la phase de déploiement, au cas où la position du passager par rapport à l'airbag évoluerait de manière défavorable.

## Revendications

1. Système pour arrêter le déploiement d'un airbag d'un véhicule, comprenant un détecteur pour détecter la position de l'airbag par rapport à un occupant du véhicule, ledit détecteur étant disposé sur l'airbag dans une région qui, lors du déploiement de l'airbag, est dirigée vers l'occupant du véhicule et générant un signal de position qui est transmis à un dispositif de commande de l'airbag, et ledit dispositif de commande arrêtant le déploiement de l'air-bag lorsque ledit signal de position indique une position prédéterminée de l'airbag par rapport à l'occupant, **caractérisé en ce que** ledit détecteur est un détecteur de contact pour détecter un contact entre l'airbag et l'occupant.

2. Système selon la revendication 1, **caractérisé en ce que** ledit détecteur de contact est un capteur de force, ledit capteur de force détectant la pression exercée par l'airbag sur l'occupant.

3. Système selon la revendication 2, dans lequel le détecteur de force comprend au moins deux structures d'électrodes disposées sur l'airbag à une certaine distance l'une de l'autre et une couche en matière semi-conductrice disposée dans une zone active du capteur, au dessus desdites structures d'électrodes, en contact intime avec celles-ci, ladite couche en matière semi-conductrice présentant une résistance interne variant avec une déformation de ladite couche.

4. Système selon la revendication 3, **caractérisé en ce que** ladite couche en matière semi-conductrice comprend une encre semi-conductrice qui est imprimée sur lesdites structures d'électrodes.

5. Système selon l'une des revendications 3 à 4, **caractérisé en ce que** ladite couche en matière semi-conductrice comprend un élastomère conductif, granulé ou non-granulé, qui est déposé ou collé sur lesdites structures d'électrodes.

6. Système selon l'une des revendications 3 à 5, **caractérisé en ce que** la couche en matière semi-conductrice est divisée en plusieurs zones disposées à différents endroits au dessus desdites structures d'électrodes et définissant ainsi plusieurs zones actives dudit détecteur.

7. Système selon l'une des revendications 3 à 6, **caractérisé en ce que** lesdites structures d'électrodes sont déposées ou imprimées sur l'airbag.

8. Système selon l'une des revendications 3 à 6, **caractérisé en ce que** lesdites structures d'électrodes sont gravées ou corrodées dans une couche métallique déposée sur l'airbag.

9. Système selon l'une des revendications 3 à 6, **caractérisé en ce que** lesdites structures d'électrodes sont tissées ou tricotées dans l'airbag.

10. Système selon l'une des revendications 3 à 9, **caractérisé par** une couche protectrice appliquée sur lesdites structures d'électrodes resp. sur lesdites structures d'électrodes et ladite couche ou lesdites couches en matière semi-conductrice.

11. Système selon l'une des revendications 1 à 10, **caractérisé en ce que** ledit détecteur de position est relié audit système de commande par l'intermédiaire de conducteurs déposés ou imprimés sur l'airbag.

12. Système de protection d'occupants d'un véhicule comprenant au moins un airbag, **caractérisé par** un système pour arrêter le déploiement de l'airbag selon l'une des revendications 1 à 11.

13. Système de protection d'occupants d'un véhicule comprenant plusieurs airbags, **caractérisé par** plusieurs systèmes pour arrêter le déploiement d'un airbag selon l'une des revendications 1 à 11, chaque système pour arrêter le déploiement d'un airbag étant associé à un des airbags du véhicule.

## Patentansprüche

1. Vorrichtung zum Anhalten des Entfaltens eines Airbags eines Fahrzeugs, die einen Detektor zum Erkennen der Position des Airbags in Bezug zu einem Fahrzeuginsassen umfasst, wobei dieser Detektor auf dem Airbag in einem während des Entfaltens des Airbags dem Fahrzeuginsassen zugewandten Bereich angeordnet ist und ein Positionssignal erzeugt, das zu einer Betätigungsvorrichtung des Airbags übertragen wird, wobei diese Betätigungsvorrichtung das Entfalten des Airbags stoppt, wenn das Positionssignal eine vorbestimmte Position des Airbags in Bezug zum Insassen anzeigt, **dadurch gekennzeichnet, dass** dieser Detektor ein Kontaktdetektor ist zum Erkennen eines Kontakts zwischen Airbag und Fahrzeuginsasse.

2. Vorrichtung nach Anspruch 1 **dadurch gekennzeichnet, dass** der Kontaktdetektor ein Kraftmessfühler ist, der den vom Airbag auf den Insassen ausgeübten Druck erkennt.

3. Vorrichtung nach Anspruch 2, wobei der Kraftmessfühler mindestens zwei Elektrodenstrukturen, die auf dem Airbag in einer gewissen Entfernung voneinander angeordnet sind, und eine in einem aktiven Bereich des Fühlers über den Elektrodenstrukturen in engem Kontakt mit diesen liegende Schicht aus halbleitendem Material umfasst, die einen Innenwiderstand aufweist, der mit der Verformung dieser Schicht variiert.

4. Vorrichtung nach Anspruch 3 **dadurch gekennzeichnet, dass** die Schicht aus halbleitendem Material eine halbleitende Tinte umfasst, die auf die Elektrodenstrukturen aufgedruckt ist.

5. Vorrichtung nach einem der Ansprüche 3 bis 4 **dadurch gekennzeichnet, dass** die Schicht aus halbleitendem Material ein leitendes, granuliertes oder nicht granuliertes Elastomer umfasst, das auf den Elektrodenstrukturen aufgebracht oder auf diese aufgeklebt ist.

6. Vorrichtung nach einem der Ansprüche 3 bis 5 **dadurch gekennzeichnet, dass** die Schicht aus halbleitendem Material in mehrere Zonen aufgeteilt ist, die an verschiedenen Stellen über den Elektrodenstrukturen angeordnet sind und somit mehrere aktive Bereiche des Detektors definieren.

7. Vorrichtung nach einem der Ansprüche 3 bis 6 **dadurch gekennzeichnet, dass** die Elektrodenstrukturen auf dem Airbag aufgebracht oder aufgedruckt sind.

8. Vorrichtung nach einem der Ansprüche 3 bis 6 **dadurch gekennzeichnet, dass** die Elektrodenstrukturen in eine auf dem Airbag aufgebrachte Metallschicht eingraviert oder eingeätzt sind.

9. Vorrichtung nach einem der Ansprüche 3 bis 6 **dadurch gekennzeichnet, dass** die Elektrodenstrukturen in den Airbag eingewebt oder eingestrickt sind.

10. Vorrichtung nach einem der Ansprüche 3 bis 9, **gekennzeichnet durch** eine Schutzschicht, die auf die Elektrodenstrukturen bzw. auf die Elektrodenstrukturen und die Schicht oder die Schichten aus halbleitendem Material aufgetragen ist.

11. Vorrichtung nach einem der Ansprüche 1 bis 10 **dadurch gekennzeichnet, dass** der Positionsdetektor mit dem Betätigungssystem über Leiter verbunden ist, die auf dem Airbag aufgebracht oder aufgedruckt sind.

12. Vorrichtung zum Schutz von Insassen eines Fahrzeugs, die mindestens einen Airbag umfasst und durch eine Vorrichtung zum Anhalten des Entfaltens des Airbags nach einem der Ansprüche 1 bis 11 gekennzeichnet ist.

13. Vorrichtung zum Schutz von Insassen eines Fahrzeugs, die mehrere Airbags umfasst und durch mehrere Vorrichtungen zum Anhalten des Entfaltens eines Airbags nach einem der Ansprüche 1 bis 11 gekennzeichnet ist, wobei jede Vorrichtung zum Anhalten des Entfaltens eines Airbags mit einem der Airbags des Fahrzeugs zusammenwirkt.

## Claims

1. System for stopping the deployment of an airbag in a vehicle, comprising a detector for detecting the position of the airbag in relation to an occupant of the vehicle, said detector being located on the airbag in an area which, on deployment of the airbag, is facing the occupant of the vehicle and generating a position signal which is sent to an airbag operating device, and said operating device stopping the deployment of the airbag when said position signal indicates a preset position of the airbag in relation to the occupant, **characterised in that** said detector is a contact detector for detecting a contact between the airbag and the occupant.

2. System according to Claim 1, **characterised in that** said contact detector is a force pick-up, said force pick-up detecting the pressure exerted by the airbag on the occupant.

3. System according to Claim 2, wherein the force detector comprises at least two electrode structures located on the airbag at a certain distance from each other and a layer of semi-conducting material located in an active area of the pick-up, above said electrode structures, in close contact with the latter, said layer of semi-conducting material having an internal resistance varying with the deformation of said layer.

4. System according to Claim 3, **characterised in that** said layer of semi-conducting material comprises a semi-conducting ink which is printed onto said electrode structures.

5. System according to any one of Claims 3 to 4, **characterised in that** said layer of semi-conducting material comprises a conductive elastomer, granulated or non-granulated, which is deposited or glued onto said electrode structures.

6. System according to any one of Claims 3 to 5, **characterised in that** the layer of semi-conducting material is divided into several areas, located at different places above said electrode structures and defining several active areas of said detector.

7. System according to any one of Claims 3 to 6, **characterised in that** said electrode structures are deposited or printed on the airbag.

8. System according to any one of Claims 3 to 6, **characterised in that** said electrode structures are engraved or etched onto a metal layer deposited on the airbag.

9. System according to any one of Claims 3 to 6, **characterised in that** said electrode structures are woven or knitted into the airbag.

10. System according to any one of Claims 3 to 9, **characterised by** a protective layer applied to said electrode structures resp. on said electrode structures and said layer or layers of semi-conducting material.

11. System according to any one of Claims 1 to 10, **characterised in that** said position detector is linked to said operating system by the intermediary of conductors deposited or printed on the airbag.

12. System for protecting the occupants of a vehicle comprising at least one airbag, **characterised by** a system for stopping the deployment of the airbag according to any one of Claims 1 to 11.

13. System for protecting the occupants of a vehicle comprising several airbags, **characterised by** several systems for stopping the deployment of an airbag according to any one of Claims 1 to 11, each system for stopping the deployment of an airbag being associated with one of the airbags of the vehicle.
